# EUROPÄISCHE PATENTSCHRIFT

(11) **EP 2 793 288 B1**
(45) Veröffentlichungstag und Bekanntmachung des Hinweises auf die Patenterteilung: **21.10.2015**
(21) Anmeldenummer: 13164128.4
(22) Anmeldetag: 17.04.2013
(51) Int. Cl.: H01M 2/10, H01M 2/20, H01M 2/30

(54) **Batteriesystem und Verfahren zur Herstellung einer elektrisch leitenden Verbindung zwischen einem Zellverbinder und einer Elektronikeinheit eines Batteriesystems**
Battery system and method for producing an electroconductive connection between a cell connector and an electronics unit of a battery system
Système de batterie et procédé de fabrication d'une liaison conductrice d'électricité entre un connecteur de cellules et une unité électronique d'un système de batterie

(43) Veröffentlichungstag der Anmeldung: 22.10.2014
(73) Patentinhaber: Samsung SDI Co., Ltd., Yongin-si, Gyeonggi-do (KR)
(72) Erfinder: FAULAND, David, 8522 Groß St. Florian (AT); KROPSCH, Thomas, 8700 Leoben (AT)
(74) Vertreter: Gulde & Partner

(56) Entgegenhaltungen:
- JP-A- 2011 049 047
- US-A1- 2012 015 550
- US-A1- 2012 323 511

## Beschreibung

Batteriesystem, umfassend eine Vielzahl von Zellen die in zumindest einem Stapel angeordnet sind, wobei ein erster Pol einer ersten Zelle mit einem zweiten Pol einer zweiten Zelle durch einen Zellverbinder elektrisch leitend verbunden ist, eine Elektronikeinheit die dazu eingerichtet ist die Spannung der Zellen zu erfassen, wobei auf dem Zellverbinder ein erstes Kontaktierungselement und auf der Elektronikeinheit ein zweites Kontaktierungselement angeordnet ist, und einen Leiter, wobei ein erster Abschnitt des Leiters mit dem ersten Kontaktierungselement und ein zweiter Abschnitt des Leiters mit dem zweiten Kontaktierungselement elektrisch leitend verbunden ist, wobei die Kontaktierung des Leiters mit dem erstem und dem zweiten Kontaktierungselement mittels ersten Kontaktgliedern erfolgt, die am ersten und zweiten Kontaktierungselement ausgebildet sind und die dazu eingerichtet sind die Isolation des Leiters zumindest abschnittsweise zu durchdringen und/oder den Leiter zumindest abschnittsweise zu verformen, wobei das erste Kontaktierungselement eine erste Öffnung und das zweite Kontaktierungselement eine zweite Öffnung aufweist, in die der Leiter zur Kontaktierung mit den ersten Kontaktgliedern einführbar ist, sowie Verfahren zur Herstellung einer elektrisch leitenden Verbindung.

Derartige Batteriesysteme werden vor Allem als Energiespeicher in Kraftfahrzeugen eingesetzt, beispielsweise für den Antrieb von Elektro- und Hybridfahrzeugen.

Ein Batteriesystem der gattungsgemäßen Art ist aus der Offenlegung US 2012/015550 A1 bekannt. Darin sind eine Vielzahl von Batterien Seite an Seite angeordnet, wobei ein Busbar eine serielle Verbindung der Batterien herstellt. Mit dem Busbar ist ein Anschluss verbunden der einen Draht aufweist. Im Anschluss sind Klingen vorgesehen die dazu eingerichtet sind durch eine isolierende Hülle des Drahts zu schneiden und eine Druck-Kontaktierung mit dem Kern des Drahts herzustellen. Der Draht führt zu einer nicht näher beschriebenen Spannungs-Messeinrichtung.

Aus der Offenlegung JP 2011-049047 A ist eine Batterie-VerbindungsVorrichtung mit einer Vielzahl von Verbindungselementen zur elektrischen Verbindung benachbarter Elektroden-Anschlüsse bekannt. Jedes Verbindungselement weist einen Fortsatz mit einem Druck-KontaktierungsElement auf welches in Druck-Kontakt mit einer Spannungs-Erkennungs-Leitung steht. Die Spannungs-Erkennungs-Leitung führt zu einer Steuereinheit, welche Klingen zur Kontaktierung der Spannungs-Erkennungs-Leitung aufweist.

Bei den genannten Anwendungen ist es erwünscht einen hohen Automatisierungsgrad bei der Montage des Batteriesystems zu erreichen. Insbesondere bei Batteriesystemen mit einer großen Anzahl an Zellen ist eine automatisierte Verlegung und Kontaktierung der Zellspannungs-Messleitungen erforderlich, da nur auf diese Weise eine prozesssichere Montage erreicht wird. Ein manuelles Verlegen und Kontaktieren der Zellspannungs-Messleitungen wäre anfällig für inkorrekte Verlegung sowie mangelhafte Kontaktierung. Etwaige Fehler wären schwierig zu erkennen, und würden ein hohes Maß an Nacharbeit nach sich ziehen. Für eine automatisierte Verlegung und Kontaktierung müssen insbesondere die Schnittstellen an denen die Zellspannungs-Messleitungen kontaktiert werden gut zugänglich sein.

Im bisher bekannten Stand der Technik ragt der Kontaktierungs-Abschnitt der Zellspannungs-Messleitung am Zellverbinder über den Rand des Zellverbinders hinaus, und/oder steht senkrecht von einer Grundfläche des Zellverbinders ab. Dadurch wird zwar eine gute Zugänglichkeit des Kontaktierungsabschnitts der Zellspannungs-Messleitung am Zellverbinder erreicht, allerdings steigen dadurch die Abmessungen des Batteriesystems. Dies ist unerwünscht, da der im Fahrzeug für das Batteriesystem zur Verfügung stehende Bauraum begrenzt ist. Zudem ist bei der Kontaktierung der Zellspannungs-Messleitung darauf zu achten, dass die mit dem Zellverbinder verbundene Zelle sowie die Elektronikeinheit durch die mechanische Belastung bei der Kontaktierung nicht beschädigt wird. Sowohl die Elektronikeinheit als auch die Zellen können bei Druckbelastungen geschädigt, oder auch nicht-erkennbar vorgeschädigt werden. Eine zunächst nicht-erkennbare Vorschädigung kann zu einem späteren mechanischen Versagen führen.

Es ist daher eine Aufgabe der Erfindung, Batteriesysteme der genannten Art so zu verbessern, dass eine automatisierte Verlegung und Kontaktierung der Zellspannungs-Messleitungen zur prozesssicheren Montage bei gleichzeitig geringen Abmessungen des Batteriesystems und geringen mechanischen Belastungen von Zellen und Elektronikeinheit ermöglicht wird.

Eine weitere Aufgabe der Erfindung ist es ein Verfahren zur Herstellung einer elektrisch leitenden Verbindung in einem Batteriesystem bereitzustellen, durch das eine prozesssichere und gut automatisierbare Verlegung und Kontaktierung der Zellspannungs-Messleitungen ermöglicht wird.

Die Lösung der Aufgabe erfolgt durch ein Batteriesystem, umfassend eine Vielzahl von Zellen die in zumindest einem Stapel angeordnet sind, wobei ein erster Pol einer ersten Zelle mit einem zweiten Pol einer zweiten Zelle durch einen Zellverbinder elektrisch leitend verbunden ist, eine Elektronikeinheit die dazu eingerichtet ist die Spannung der Zellen zu erfassen, wobei auf dem Zellverbinder ein erstes Kontaktierungselement und auf der Elektronikeinheit ein zweites Kontaktierungselement angeordnet ist, und einen Leiter, wobei ein erster Abschnitt des Leiters mit dem ersten Kontaktierungselement und ein zweiter Abschnitt des Leiters mit dem zweiten Kontaktierungselement elektrisch leitend verbunden ist, wobei die Kontaktierung des Leiters mit dem erstem und dem zweiten Kontaktierungselement mittels ersten Kontaktgliedern erfolgt, die am ersten und zweiten Kontaktierungselement ausgebildet sind und die dazu eingerichtet sind die Isolation des Leiters zumindest abschnittsweise zu durchdringen und den Leiter zumindest abschnittsweise zu verformen, wobei das erste Kontaktierungselement eine erste Öffnung und das zweite Kontaktierungselement eine zweite Öffnung aufweist, in die der Leiter zur Kontaktierung mit den ersten Kontaktgliedern einführbar ist, wobei die erste Öffnung so ausgerichtet ist dass der erste Abschnitt des Leiters parallel zur Grundfläche des Zellverbinders einführbar ist und dass die zweite Öffnung so ausgerichtet ist dass der zweite Abschnitt des Leiters parallel zur Grundfläche der Elektronikeinheit einführbar ist, wobei am ersten Kontaktierungselement eine erste Hilfsvorrichtung und am zweiten Kontaktierungselement eine zweite Hilfsvorrichtung angeordnet ist, wobei die erste Hilfsvorrichtung einen ersten Aufnahmeabschnitt aufweist in den der erster Abschnitt des Leiters im nicht-kontaktierten Zustand senkrecht zur Grundfläche des Zellverbinders einlegbar ist, und dass die zweite Hilfsvorrichtung einen zweiten Aufnahmeabschnitt aufweist in den der zweite Abschnitt des Leiters im nicht-kontaktierten Zustand senkrecht zur Grundfläche der Elektronikeinheit einlegbar ist, wobei die erste Hilfsvorrichtung zur Kontaktierung parallel zur Grundfläche des Zellverbinders zu den ersten Kontaktgliedern des ersten Kontaktierungselements hin verschiebbar ausgebildet ist, und dass die zweite Hilfsvorrichtung zur Kontaktierung parallel zur Grundfläche der Elektronikeinheit zu den ersten Kontaktgliedern des zweiten Kontaktierungselements hin verschiebbar ausgebildet ist, wobei das erste und das zweite Kontaktierungselement sowie die erste und die zweite Hilfsvorrichtung für die Verschiebung geeignete Führungen oder Schienen aufweisen.

Erfindungsgemäß wird durch die Ausrichtung der ersten und zweiten Öffnung erreicht, dass die Kontaktierung des ersten Abschnitts des Leiters mit dem ersten Kontaktierungselement parallel zur Grundfläche des Zellverbinders, und die Kontaktierung des zweiten Abschnitts des Leiters mit dem zweiten Kontaktierungselement parallel zur Grundfläche der Elektronikeinheit erfolgen kann. Das Kontaktierungswerkzeug kann das erste/zweite Kontaktierungselement bei der Kontaktierung derart umgreifen, dass die zum Kontaktieren erforderliche Kraft direkt am ersten/zweiten Kontaktierungselement abgestützt wird. Dadurch erfährt weder der Zellverbinder und die damit verbundene Zelle, noch die Elektronikeinheit eine mechanische Belastung. Einer Schädigung oder Vorschädigung von Zelle oder Elektronikeinheit wird dadurch entgegengewirkt.

Der Leiter kann entweder als massiver Leiter ausgebildet sein oder aus mehreren Leitungslitzen bestehen. Besteht der Leiter aus mehreren Leitungslitzen und bildet derart einen Drahtlitzenleiter, so wird bei der Kontaktierung mit dem ersten/zweiten Kontaktierungselement der scheinbare Durchmesser des Drahtlitzenleiters sowie jene Leitungslitzen die mit den ersten Kontaktgliedern in Berührung stehen, verformt.

Die Elektronikeinheit ist dabei bevorzugt als Printed Ciruit Board (PCB) ausgeführt, und weist somit einen flächigen Aufbau auf. Die auf der Elektronikeinheit befestigten Komponenten sind dabei zumindest auf deren Grundfläche, sowie optional auf der der Grundfläche gegenüberliegenden Rückseite befestigt. Der Zellverbinder weist ebenso einen flächigen Aufbau auf, und besteht aus einem ersten Abschnitt, mit dem der erste Pol der ersten Zelle verbunden ist, einem zweiten Abschnitt, mit dem der zweite Pol der zweiten Zelle verbunden ist, und einem Verbindungsabschnitt der den ersten Abschnitt mit dem zweiten Abschnitt verbindet. Erster und zweiter Abschnitt des Zellverbinders sind in einer gemeinsamen Ebene angeordnet und bilden die Grundfläche des Zellverbinders. Der Verbindungsabschnitt kann Bereiche aufweisen, die sich von der Grundfläche des Zellverbinders abheben, beispielweise einen mechanisch flexiblen Bereich mit einer Entlastungs-Welle oder Vertiefung.

Die Lösung der Aufgabe erfolgt auch durch ein Verfahren zur Herstellung einer elektrisch leitenden Verbindung zwischen einem Zellverbinder, welcher mit Polen von zumindest zwei Zellen eines Batteriesystems verbunden ist, und einer Elektronikeinheit durch einen Leiter, umfassend die Schritte: Befestigen eines ersten Kontaktierungselements am Zellverbinder, Befestigen eines zweiten Kontaktierungselements an der Elektronikeinheit, Einlegen eines ersten Abschnitts des Leiters in eine erste Hilfsvorrichtung des ersten Kontaktierungselements, wobei die Einlegerichtung senkrecht zur Grundfläche des Zellverbinders ist, Verschieben der ersten Hilfsvorrichtung parallel zur Grundfläche des Zellverbinders zu den ersten Kontaktgliedern des ersten Kontaktierungselements, Einlegen eines zweiten Abschnitts des Leiters in eine zweite Hilfsvorrichtung des zweiten Kontaktierungselements, wobei die Einlegerichtung senkrecht zur Grundfläche der Elektronikeinheit ist, und Verschieben der zweiten Hilfsvorrichtung parallel zur Grundfläche der Elektronikeinheit zu den ersten Kontaktgliedern des zweiten Kontaktierungselements.

Erfindungsgemäß erleichtert die Zuführung des Leiters in die erste/zweite Hilfsvorrichtung senkrecht zur Grundfläche von Zellverbinder/Elektronikeinheit das Halten des Leiters im Herstellungsverfahren des Batteriesystems. Denn das erste/zweite Kontaktierungselement samt erster/zweiter Hilfsvorrichtung ist nur wenige Millimeter hoch, beispielsweise weniger als 5 mm. Eine Zuführung des Leiters von der Seite, d.h. in einer Ebene parallel zu Zellverbinder/Elektronikeinheit zur ersten/zweiten Öffnung hin wäre bei dieser geringen Bauhöhe schwierig, da das Kontaktierungswerkzeug den Leiter zum Halten ja umgreifen muss. Der dafür erforderliche Freigang des Kontaktierungswerkzeugs zu Zellverbinder/Elektronikeinheit könnte bei einer seitlichen Zuführung nur eingeschränkt gewährleistet werden. Ist der erste/zweite Abschnitt in die erste/zweite Hilfsvorrichtung eingelegt, so wird die erste/zweite Hilfsvorrichtung seitlich, d.h. parallel zur Grundfläche von Zellverbinder/Elektronikeinheit zu den entsprechenden ersten Kontaktgliedern von erstem/zweitem Kontaktierungselement verschoben. Dies erfolgt bevorzugt mit dem selben Kontaktierungswerkzeug.

Durch die seitliche Verschiebung der ersten Hilfsvorrichtung kommt es zur Kontaktierung des ersten Abschnitt des Leiters mit den ersten Kontaktgliedern des ersten Kontaktierungselement, d.h. die Isolation des Leiters wird durchdrungen und der erste Abschnitt des Leiters wird verformt, wodurch eine stabile, elektrisch leitende Verbindung zwischen dem ersten Abschnitt des Leiters und dem ersten Kontaktierungselement hergestellt wird. Die Kontaktierung des zweiten Abschnitts des Leiters mit dem zweiten Kontaktierungselement erfolgt analog dazu.

Bevorzugt weist das erste Kontaktierungselement einen Fortsatz auf mit dem das erste Kontaktierungselement am Zellverbinder befestigt werden kann, beispielweise durch Einpressen. Alternativ dazu weist das erste Kontaktierungselement eine geeignete Schnittstelle auf, an der eine Ultraschall-Kontaktierung zwischen erstem Kontaktierungselement und dem Zellverbinder hergestellt werden kann.

Das zweite Kontaktierungselement weist bevorzugt ebenfalls einen Fortsatz auf mit dem das zweite Kontaktierungselement an der Elektronikeinheit befestigt werden kann, beispielweise durch Einpressen. Alternativ dazu wird das zweite Kontaktierungselement im Lötverfahren auf der Elektronikeinheit befestigt, beispielsweise im Reflow-Verfahren.

Erfindungsgemäß ist am ersten Kontaktierungselement eine erste Hilfsvorrichtung und am zweiten Kontaktierungselement eine zweite Hilfsvorrichtung angeordnet, wobei die erste Hilfsvorrichtung einen ersten Aufnahmeabschnitt aufweist in den der erster Abschnitt des Leiters im nicht kontaktierten Zustand senkrecht zur Grundfläche des Zellverbinders einlegbar ist. Die zweite Hilfsvorrichtung weist einen zweiten Aufnahmeabschnitt auf in den der zweite Abschnitt des Leiters im nicht-kontaktierten Zustand senkrecht zur Grundfläche der Elektronikeinheit einlegbar ist. Im nicht-kontaktierten Zustand ist der erste/zweite Abschnitt des Leiters nicht mit dem ersten/zweiten Kontaktierungselement verbunden. Dieser Zustand tritt während der Montage des Batteriesystems ein. Durch die Ausrichtung des ersten/zweiten Aufnahmeabschnitts an der ersten/zweiten Hilfsvorrichtung ist ein automatisiertes Zuführen des Leiters zur ersten/zweiten Hilfsvorrichtung möglich, da der Leiter derart durch ein entsprechendes Kontaktierungswerkzeug umgriffen werden kann ohne den erforderlichen Werkzeug-Freigang zu Zellverbinder/Elektronikeinheit zu unterschreiten.

Gemäß einer weiteren Ausgestaltung der Erfindung ist die erste Hilfsvorrichtung im nicht-kontaktierten Zustand des ersten Kontaktierungselements so angeordnet, dass sie die erste Öffnung zumindest teilweise verdeckt. Die zweite Hilfsvorrichtung ist im nicht kontaktierten Zustand des zweiten Kontaktierungselements so angeordnet, dass sie die zweite Öffnung zumindest teilweise verdeckt. Dadurch wird erreicht, dass der erste/zweite Abschnitt des Leiters bei der Montage vor der Kontaktierung nicht versehentlich mit den ersten Kontaktgliedern des ersten/zweiten Kontaktierungselements in Berührung kommt. Damit wird verhindert, dass der Leiter bei seiner Verlegung vor der Kontaktierung durch die ersten Kontaktglieder verletzt wird.

Erfindungsgemäß ist die erste Hilfsvorrichtung zur Kontaktierung parallel zur Grundfläche des Zellverbinders zu den ersten Kontaktgliedern des ersten Kontaktierungselements hin verschiebbar ausgebildet. Die zweite Hilfsvorrichtung ist zur Kontaktierung parallel zur Grundfläche der Elektronikeinheit zu den ersten Kontaktgliedern des zweiten Kontaktierungselements hin verschiebbar ausgebildet. Erstes und zweites Kontaktierungselement sowie erste und zweite Hilfsvorrichtung weisen dazu geeignete Führungen oder Schienen auf, sowie optional Anschläge damit die erste/zweite Hilfsvorrichtung sich nicht versehentlich vom ersten/zweiten Kontaktierungselement lösen kann.

Vorzugsweise ist der Stapel der Zellen so angeordnet, dass die Pole der Zellen zwei Reihen bilden, wobei die Elektronikeinheit zwischen diesen Reihen angeordnet ist. Dadurch kann die Elektronikeinheit besonders platzsparend angeordnet werden, wodurch die gesamten äußeren Abmessungen des Batteriesystems reduziert werden. Gemäß einer weiteren Ausgestaltung der Erfindung ist die Elektronikeinheit auf einer Halteplatte befestigt, welche auf dem zumindest einen Stapel von Zellen angeordnet ist. Die Halteplatte kann dabei über die beiden Reihen hinausragen, und auch die Zellverbinder beherbergen und halten.

Gemäß einer Ausführungsform der Erfindung verläuft der Leiter bis auf einen Höhenausgleich und einen Längenausgleich in gerader Linie von erstem Kontaktierungselement zum zweiten Kontaktierungselement. Bevorzugt ist das erste Kontaktierungselement in unmittelbarer Nähe, d.h. innerhalb weniger Zentimeter, vom zweiten Kontaktierungselement angeordnet. Dadurch kann der Leiter in gerader Linie, d.h. ohne Umlenkung zwischen erstem und zweitem Kontaktierungselement verlaufen. Zur Vermeidung einer Zugbelastung des Leiters, sowie zum Ausgleich von Toleranzen der Position zwischen erstem und zweitem Kontaktierungselement ist jedoch ein Höhenausgleich und ein Längenausgleich vorgesehen. Die freie Länge des Leiters zwischen erstem und zweiten Kontaktierungselement ist daher so gewählt, dass Unterschiede in Höhe und Distanz ausgeglichen werden.

Vorzugsweise ist an der Halteplatte zumindest ein Fortsatz ausgebildet ist, der dazu eingerichtet ist den Verlauf des Leiters von erstem Kontaktierungselement zu zweitem Kontaktierungselement umzulenken. Besonders bei einem Stapel mit einer großen Anzahl an Zellen erstreckt sich die Elektronikeinheit nicht entlang der gesamten Stapel-Länge. Derart lange Elektronikeinheiten sind unüblich und oft nicht verfügbar, da die Fertigungseinrichtungen von Elektronikeinheiten wie beispielsweise ein Lötofen nicht zur Aufnahme derart langer Elektronikeinheiten geeignet sind. Ein Verbund aus mehreren Elektronikeinheiten bedeutet jedoch einen erhöhten Aufwand in der Verbindungstechnik zwischen diesen Elektronikeinheiten. Daher ist besonders für jene Leiter, die mit einem ersten Kontaktierungselement verbunden sind welche im Stapel von der Elektronikeinheit entfernt angeordnet sind, eine Umlenkung des Leiters vorteilhaft.

Gemäß einer weiteren Ausgestaltung der Erfindung ist die Grundfläche der Elektronikeinheit parallel zur Grundfläche des Zellverbinders. Besonders bevorzugt ist die Grundfläche der Elektronikeinheit in der gleichen Ebene wie die Grundfläche des Zellverbinders angeordnet. Dies erleichtert die automatisierte Herstellung des Batteriesystems, da das Kontaktierungswerkzeug lediglich in einer Ebene verfahren muss.

Vorzugweise umfasst das erste und/oder das zweite Kontaktierungselement zweite Kontaktglieder die dazu eingerichtet sind im kontaktierten Zustand einen Abschnitt des Leiters an seiner Isolation zu verklemmen. Gemäß einer weiteren Ausgestaltung der Erfindung wird durch das Verschieben der ersten Hilfsvorrichtung die Isolation eines Abschnitts des Leiters zwischen der ersten Hilfsvorrichtung und den zweiten Kontaktgliedern verklemmt. Ebenso wird durch das Verschieben der zweiten Hilfsvorrichtung die Isolation eines Abschnitts des Leiters zwischen der zweiten Hilfsvorrichtung und den zweiten Kontaktgliedern verklemmt. Die zweiten Kontaktglieder dienen dabei als Zugentlastung für den ersten/zweiten Abschnitt des Leiters. Durch die Zugentlastung wird die Haltbarkeit der Verbindung zwischen erstem/zweitem Abschnitt des Leiters und erstem/zweitem Kontaktierungselement erheblich verbessert.

Die zweiten Kontaktglieder sind dabei so angeordnet, dass die den ersten/zweiten Abschnitt des Leiters in den ersten Kontaktgliedern von Zug entlasten. Infolgedessen sind die zweiten Kontaktglieder des ersten Kontaktierungselements weiter vom demjenigen Ende des Leiters, an dem sich der erste Abschnitt des Leiters befindet, entfernt als die ersten Kontaktglieder des ersten Kontaktierungselements. Analog dazu sind die zweiten Kontaktglieder des zweiten Kontaktierungselements weiter vom demjenigen Ende des Leiters, an dem sich der zweite Abschnitt des Leiters befindet, entfernt als die ersten Kontaktglieder des zweiten Kontaktierungselements. Die zweiten Kontaktglieder befinden sich demnach im Verlauf des Leiters innerhalb der ersten Kontaktglieder.

Die Erfindung wird im Folgenden beispielhaft unter Bezugnahme auf die Zeichnungen beschrieben.
- Fig. 1: zeigt eine schematische Draufsicht auf ein erfindungsgemäßes Batteriesystem.
- Fig. 2: zeigt eine schematische Seitenansicht eines ersten/zweiten Kontaktierungselements.
- Fig. 3: zeigt eine schematische Seitenansicht des ersten/zweiten Kontaktierungselements mit einer ersten/zweiten Hilfsvorrichtung im nicht-kontaktierten Zustand.
- Fig. 4: zeigt eine schematische Seitenansicht des ersten/zweiten Kontaktierungselements mit erster/zweiter Hilfsvorrichtung und in erste/zweite Hilfsvorrichtung eingelegtem erstem/zweitem Abschnitt eines Leiters im nicht-kontaktierten Zustand.
- Fig. 5: zeigt eine schematische Seitenansicht des ersten/zweiten Kontaktierungselements samt erster/zweiter Hilfsvorrichtung im kontaktierten Zustand.
- Fig. 6: zeigt eine schematische Darstellung des ersten/zweiten Kontaktierungselements mit ersten und zweiten Kontaktgliedern.

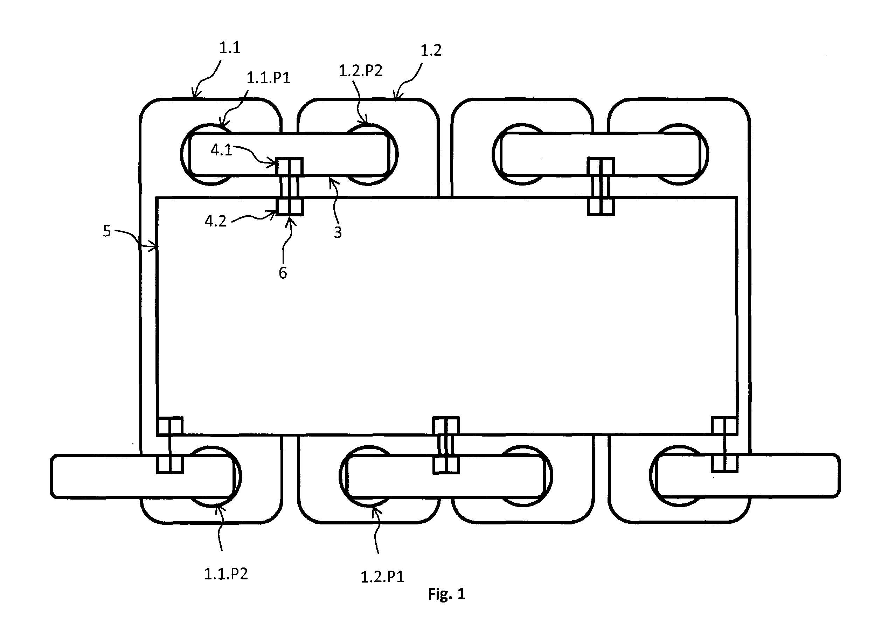

In der Fig. 1 ist eine schematische Draufsicht auf ein erfindungsgemäßes Batteriesystem dargestellt. Eine Vielzahl von Zellen 1.1, 1.2 sind in einem Stapel angeordnet, sodass die Pole 1.1.P1, 1.1.P2, 1.2.P1, 1.2.P2 der Zellen 1.1, 1.2 zwei Reihen bilden. Ein erster Pol 1.1.P1 einer ersten Zelle 1.1 ist mit einem zweiten Pol 1.2.P2 einer zweiten Zelle 1.2 elektrisch leitend durch einen Zellverbinder 3 verbunden. Zwischen den zwei Reihen der Pole 1.1.P1, 1.1.P2, 1.2.P1, 1.2.P2 ist eine Elektronikeinheit 5 angeordnet. Auf dem Zellverbinder 3 ist ein erstes Kontaktierungselement 4.1 angeordnet. Das erste Kontaktierungselement 4.1 ist auf geeignete Weise elektrisch leitend und mechanisch mit dem Zellverbinder 3 fest verbunden. Beispielsweise ist das erste Kontaktierungselement 4.1 in den Zellverbinder 3 eingepresst oder auf diesen aufgelötet oder aufgeschweißt. Die Elektronikeinheit 5 weist eine Vielzahl von zweiten Kontaktierungselementen 4.2 auf. Jedes zweite Kontaktierungselement 4.2 ist mit einer Leiterbahn der Elektronikeinheit 5 elektrisch leitend verbunden, beispielsweise durch eine Löt- oder eine Steckverbindung. Jedes zweite Kontaktierungselement 4.2 ist mit je einem ersten Kontaktierungselement 4.1 über einen Leiter 6 elektrisch leitend verbunden. Die Elektronikeinheit 5 ist dazu eingerichtet die Spannung der Zellen 1.1, 1.2 zu erfassen und auszuwerten. Die Spannung der Zellen 1.1, 1.2 wird über Zellverbinder 3, erstes Kontaktierungselement 4.1, Leiter 6 und zweitem Kontaktierungselement 4.2 zur Elektronikeinheit 5 übertragen.

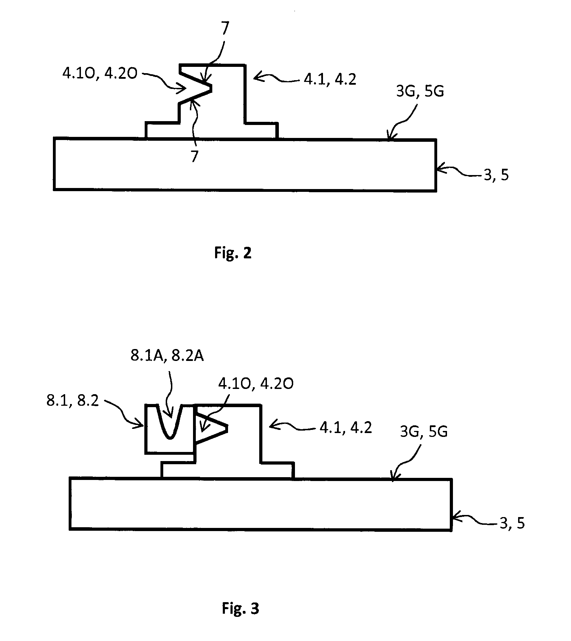

Fig. 2 zeigt eine schematische Seitenansicht des ersten/zweiten Kontaktierungselements 4.1/4.2. Erstes und zweites Kontaktierungselement 4.1, 4.2 sind im wesentlichen gleich aufgebaut, und unterscheiden sich lediglich durch ihre mechanische und elektrische Anbindung an Zellverbinder 3, bzw. Elektronikeinheit 5. Das erste Kontaktierungselement 4.1 ist auf einer Grundfläche 3G des Zellverbinder 3 angeordnet, während das zweite Kontaktierungselement 4.2 auf einer Grundfläche 5G der Elektronikeinheit 5 angeordnet ist. Das erste/zweite Kontaktierungselement 4.1/4.2 weist erste Kontaktglieder 7 auf, die dazu eingerichtet sind die Isolation des Leiters 6 zumindest abschnittsweise zu durchdringen und den Leiter 6 zumindest abschnittsweise zu verformen. Die ersten Kontaktglieder 7 können beispielsweise aus Klingen gebildet sein, die gemeinsam eine Schneidklemme bilden. Alternativ dazu können die ersten Kontaktglieder 7 auch als Stechspitzen gebildet sein. Das erste Kontaktierungselement 4.1 weist eine erste Öffnung 4.10 auf. Die erste Öffnung 4.10 ist dabei so angeordnet, dass in die erste Öffnung 4.10 ein erster Abschnitt 6.1 des Leiters 6 in einer Ebene parallel zur Grundfläche 3G des Zellverbinders 3 einführbar ist. Das zweite Kontaktierungselement 4.2 weist eine zweite Öffnung 4.20 auf. Die zweite Öffnung 4.20 ist dabei so angeordnet, dass in die zweite Öffnung 4.20 ein zweiter Abschnitt 6.2 des Leiters 6 in einer Ebene parallel zur Grundfläche 5G der Elektronikeinheit 5 einführbar ist.

In Fig. 3 ist eine schematische Seitenansicht des ersten/zweiten Kontaktierungselements 4.1/4.2 mit einer ersten/zweiten Hilfsvorrichtung 8.1/8.2 im nicht-kontaktierten Zustand dargestellt. Die erste Hilfsvorrichtung 8.1 ist in diesem Zustand so angeordnet, dass sie die erste Öffnung 4.10 zumindest teilweise verdeckt. Die erste Hilfsvorrichtung 8.1 weist einen ersten Aufnahmeabschnitt 8.1A mit einem offenen Querschnitt auf. Auch die zweite Hilfsvorrichtung 8.2 ist im nicht-kontaktierten Zustand so angeordnet, dass sie die zweite Öffnung 4.20 zumindest teilweise verdeckt. Die zweite Hilfsvorrichtung 8.2 weist einen zweiten Aufnahmeabschnitt 8.2A mit einem offenen Querschnitt auf.

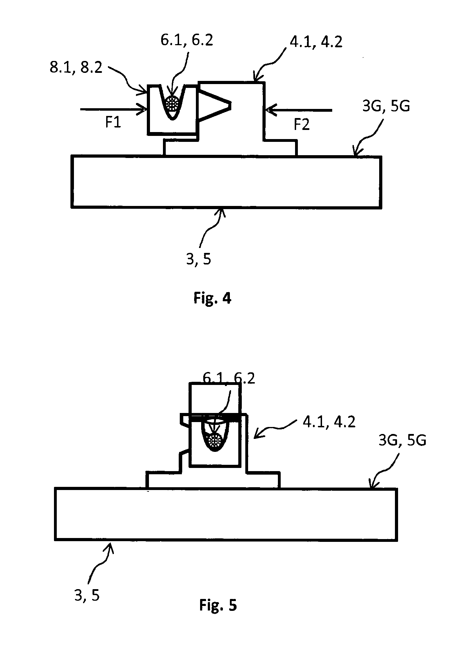

Fig. 4 zeigt eine schematische Seitenansicht des ersten/zweiten Kontaktierungselements 4.1/4.2 mit erster/zweiter Hilfsvorrichtung 8.1/8.2 im nicht-kontaktierten Zustand, und in die erste/zweite Hilfsvorrichtung 8.1/8.2 eingelegtem erstem/zweitem Abschnitt 6.1/6.2 des Leiters 6. In den ersten Aufnahmeabschnitt 8.1A ist der erste Abschnitt 6.1 des Leiters 6 eingelegt, wobei der erste Abschnitt 6.1 des Leiters 6 senkrecht zur Grundfläche 3G des Zellverbinders 3 einlegbar ist. In den zweiten Aufnahmeabschnitt 8.2A ist der zweite Abschnitt 6.2 des Leiters 6 eingelegt, wobei der zweite Abschnitt 6.2 des Leiters 6 senkrecht zur Grundfläche 5G der Elektronikeinheit 5 einlegbar ist. Die erste Hilfsvorrichtung 8.1 ist parallel zur Grundfläche 3G des Zellverbinders 3 zu den ersten Kontaktgliedern 7 des ersten Kontaktierungselements 4.1 hin verschiebbar. Dabei wird entlang einer ersten Kraftrichtung F1 eine Kraft auf die erste Hilfsvorrichtung 8.1 ausgeübt. Auf der der ersten Öffnung 4.10 gegenüberliegenden Seite des ersten Kontaktierungselements 4.1 wird entlang einer zweiten Kraftrichtung F2 ebenfalls eine Kraft ausgeübt, um das erste Kontaktierungselement 4.1 abzustützen. Derart wird die erste Hilfsvorrichtung 8.1 zu den ersten Kontaktgliedern 7 des ersten Kontaktierungselements 4.1 verschoben, wodurch der erste Abschnitt 6.1 des Leiters 6 mit den ersten Kontaktgliedern 7 kontaktiert wird und so die Isolation des ersten Abschnitts 6.1 Leiters 6 durchdrungen und der erste Abschnitt 6.1 des Leiters 6 von den ersten Kontaktgliedern 7 verformt wird. Die Kräfte werden dabei von einem nicht dargestellten Kontaktierungswerkzeug aufgebracht. Die erste und zweite Kraftrichtung F1, F2 sind parallel zur Grundfläche 3G des Zellverbinders 3.

Die zweite Hilfsvorrichtung 8.2 ist parallel zur Grundfläche 5G der Elektronikeinheit 5 zu den ersten Kontaktgliedern 7 des zweiten Kontaktierungselements 4.2 hin verschiebbar. Dabei wird entlang einer ersten Kraftrichtung F1 eine Kraft auf die zweite Hilfsvorrichtung 8.2 ausgeübt. Auf der der zweiten Öffnung 4.20 gegenüberliegenden Seite des zweiten Kontaktierungselements 4.2 wird entlang einer zweiten Kraftrichtung F2 ebenfalls eine Kraft ausgeübt, um das zweite Kontaktierungselement 4.2 abzustützen. Derart wird die zweite Hilfsvorrichtung 8.2 zu den ersten Kontaktgliedern 7 des zweiten Kontaktierungselements 4.2 verschoben, wodurch der zweite Abschnitt 6.2 des Leiters 6 mit den ersten Kontaktgliedern 7 kontaktiert wird und so die Isolation des zweiten Abschnitts 6.2 des Leiters 6 durchdrungen und der zweite Abschnitt 6.2 des Leiters 6 von den ersten Kontaktgliedern 7 verformt wird. Die Kräfte werden dabei von einem nicht dargestellten Kontaktierungswerkzeug aufgebracht. Die erste und zweite Kraftrichtung F1, F2 sind parallel zur Grundfläche 5G der Elektronikeinheit 5.

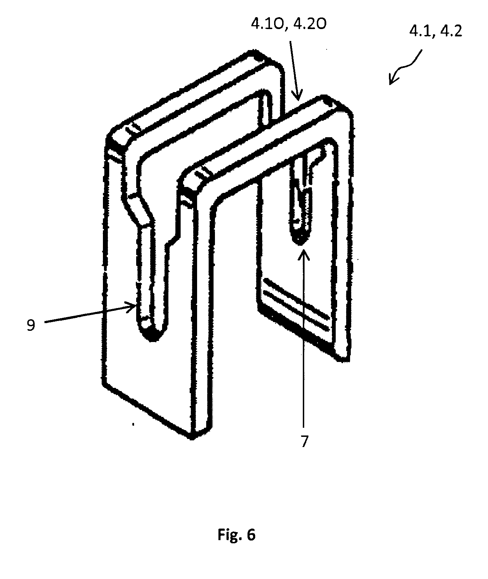

In Fig. 5 ist eine schematische Seitenansicht des ersten/zweiten Kontaktierungselements 4.1/4.2 samt erster/zweiter Hilfsvorrichtung 8.1/8.2 im kontaktierten Zustand dargestellt. Fig. 6 zeigt eine schematische Darstellung des ersten/zweiten Kontaktierungselements 4.1/4.2 mit ersten Kontaktgliedern 7 und zweiten Kontaktgliedern 9. Erste/zweite Hilfsvorrichtung 8.1/8.2 ist nicht dargestellt. Während die ersten Kontaktglieder 7 beispielsweise Klingen ausbilden, sind die zweiten Kontaktglieder 9 lediglich dazu eingerichtet die Isolation eines Abschnitts des Leiters 6 zu verklemmen. Dementsprechend bilden die zweiten Kontaktglieder 9 keine Klingen oder sonstige Einrichtungen zum Durchdringen der Isolation des Leiters 6 aus, sondern lediglich eine stumpfe Auflagefläche in die der Querschnitt des Leiters 6 mitsamt Isolation gerade hineinpasst, und so an den Auflageflächen der zweiten Kontaktglieder 9 anliegt.

### Bezugszeichenliste

- 1.1: Erste Zelle
- 1.2: Zweite Zelle
- 1.1.P1: Erster Pol der ersten Zelle
- 1.1.P2: Zweiter Pol der ersten Zelle
- 1.2.P1: Erster Pol der zweiten Zelle
- 1.2.P2: Zweiter Pol der zweiten Zelle
- 3: Zellverbinder
- 3G: Grundfläche des Zellverbinders
- 4.1: Erstes Kontaktierungselement
- 4.1O: Erste Öffnung
- 4.2: Zweites Kontaktierungselement
- 4.2O: Zweite Öffnung
- 5: Elektronikeinheit
- 5G: Grundfläche der Elektronikeinheit
- 6: Leiter
- 6.1: Erster Abschnitt des Leiters
- 6.2: Zweiter Abschnitt des Leiters
- 7: Erste Kontaktglieder
- 8.1: Erste Hilfsvorrichtung
- 8.1A: Erster Aufnahmeabschnitt
- 8.2: Zweite Hilfsvorrichtung
- 8.2A: Zweiter Aufnahmeabschnitt
- 9: Zweite Kontaktglieder

- F1: Erste Kraftrichtung
- F2: Zweite Kraftrichtung

## Patentansprüche

1. Batteriesystem, umfassend eine Vielzahl von Zellen (1.1, 1.2) die in zumindest einem Stapel angeordnet sind, wobei ein erster Pol (1.1.P1) einer ersten Zelle (1.1) mit einem zweiten Pol (1.2.P2) einer zweiten Zelle (1.2) durch einen Zellverbinder (3) elektrisch leitend verbunden ist, eine Elektronikeinheit (5) die dazu eingerichtet ist die Spannung der Zellen (1.1, 1.2) zu erfassen, wobei auf dem Zellverbinder (3) ein erstes Kontaktierungselement (4.1) und auf der Elektronikeinheit (5) ein zweites Kontaktierungselement (4.2) angeordnet ist, und einen Leiter (6), wobei ein erster Abschnitt (6.1) des Leiters (6) mit dem ersten Kontaktierungselement (4.1) und ein zweiter Abschnitt (6.2) des Leiters (6) mit dem zweiten Kontaktierungselement (4.2) elektrisch leitend verbunden ist, wobei die Kontaktierung des Leiters (6) mit dem erstem und dem zweiten Kontaktierungselement (4.1, 4.2) mittels ersten Kontaktgliedern (7) erfolgt, die am ersten und zweiten Kontaktierungselement (4.1, 4.2) ausgebildet sind und die dazu eingerichtet sind die Isolation des Leiters (6) zumindest abschnittsweise zu durchdringen und den Leiter (6) zumindest abschnittsweise zu verformen, wobei das erste Kontaktierungselement (4.1) eine erste Öffnung (4.10) und das zweite Kontaktierungselement (4.2) eine zweite Öffnung (4.20) aufweist, in die der Leiter (6) zur Kontaktierung mit den ersten Kontaktgliedern (7) einführbar ist, wobei die erste Öffnung (4.10) so ausgerichtet ist dass der erste Abschnitt (6.1) des Leiters (6) parallel zur Grundfläche (3G) des Zellverbinders (3) einführbar ist und wobei die zweite Öffnung (4.20) so ausgerichtet ist dass der zweite Abschnitt (6.2) des Leiters (6) parallel zur Grundfläche (5G) der Elektronikeinheit (5) einführbar ist, wobei am ersten Kontaktierungselement (4.1) eine erste Hilfsvorrichtung (8.1) und am zweiten Kontaktierungselement (4.2) eine zweite Hilfsvorrichtung (8.2) angeordnet ist, wobei die erste Hilfsvorrichtung (8.1) einen ersten Aufnahmeabschnitt (8.1A) aufweist in den der erster Abschnitt (6.1) des Leiters (6) im nicht-kontaktierten Zustand senkrecht zur Grundfläche (3G) des Zellverbinders (3) einlegbar ist, und dass die zweite Hilfsvorrichtung (8.2) einen zweiten Aufnahmeabschnitt (8.2A) aufweist in den der zweite Abschnitt (6.2) des Leiters (6) im nicht-kontaktierten Zustand senkrecht zur Grund-fläche (5G) der Elektronikeinheit (5) einlegbar ist, wobei die erste Hilfsvorrichtung (8.1) zur Kontaktierung parallel zur Grundfläche (3G) des Zellverbinders (3) zu den ersten Kontaktgliedern (7) des ersten Kontaktierungselements (4.1) hin verschiebbar ausgebildet ist, und dass die zweite Hilfsvorrichtung (8.2) zur Kontaktierung parallel zur Grundfläche (5G) der Elektronikeinheit (5) zu den ersten Kontaktgliedern (7) des zweiten Kontaktierungselements (4.2) hin verschiebbar ausgebildet ist, wobei das erste und das zweite Kontaktierungselement (4.1, 4.2) sowie die erste und die zweite Hilfsvorrichtung (8.1, 8.2) für die Verschiebung geeignete Führungen oder Schienen aufweisen.

2. Batteriesystem nach Anspruch 1,
**dadurch gekennzeichnet, dass** die erste Hilfsvorrichtung (8.1) im nicht-kontaktierten Zustand des ersten Kontaktierungselements (4.1) so angeordnet ist, dass sie die erste Öffnung (4.10) zumindest teilweise verdeckt, und dass die zweite Hilfsvorrichtung (8.2) im nicht-kontaktierten Zustand des zweiten Kontaktierungselements (4.2) so angeordnet ist, dass sie die zweite Öffnung (4.20) zumindest teilweise verdeckt.

3. Batteriesystem nach einem der Ansprüche 1 bis 2,
**dadurch gekennzeichnet, dass** der Stapel der Zellen (1.1, 1.2) so angeordnet ist, dass die Pole (1.1.P1, 1.1.P2, 1.2.P1, 1.2.P2) der Zellen (1.1, 1.2) zwei Reihen bilden, wobei die Elektronikeinheit (5) zwischen diesen Reihen angeordnet ist.

4. Batteriesystem nach einem der Ansprüche 1 bis 3,
**dadurch gekennzeichnet, dass** die Elektronikeinheit (5) auf einer Halteplatte befestigt ist, welche auf dem zumindest einen Stapel von Zellen (1.1, 1.2) angeordnet ist.

5. Batteriesystem nach einem der Ansprüche 1 bis 4,
**dadurch gekennzeichnet, dass** der Leiter (6) bis auf einen Höhenausgleich und einen Längenausgleich in gerader Linie von erstem Kontaktierungselement (4.1) zum zweiten Kontaktierungselement (4.2) verläuft.

6. Batteriesystem nach einem der Ansprüche 1 bis 4,
**dadurch gekennzeichnet, dass** an der Halteplatte zumindest ein Fortsatz ausgebildet ist, der dazu eingerichtet ist den Verlauf des Leiters (6) von erstem Kontaktierungselement (4.1) zu zweitem Kontaktierungselement (4.2) umzulenken.

7. Batteriesystem nach einem der Ansprüche 1 bis 6,
**dadurch gekennzeichnet, dass** die Grundfläche (5G) der Elektronikeinheit (5) parallel zur Grundfläche (3G) des Zellverbinders (3) ist.

8. Batteriesystem nach einem der Ansprüche 1 bis 7,
**dadurch gekennzeichnet, dass** die Grundfläche (5G) der Elektronikeinheit (5) in der gleichen Ebene wie die Grundfläche (3G) des Zellverbinders (3) angeordnet ist.

9. Batteriesystem nach einem der Ansprüche 1 bis 8,
**dadurch gekennzeichnet, dass** das erste Kontaktierungselement (4.1) zweite Kontaktglieder (9) umfasst, die dazu eingerichtet sind im kontaktierten Zustand einen Abschnitt des Leiters an seiner Isolation zu verklemmen.

10. Batteriesystem nach einem der Ansprüche 1 bis 9,
**dadurch gekennzeichnet, dass** das zweite Kontaktierungselement (4.2) zweite Kontaktglieder (9) umfasst, die dazu eingerichtet sind im kontaktierten Zustand einen Abschnitt des Leiters an seiner Isolation zu verklemmen.

11. Verfahren zur Herstellung einer elektrisch leitenden Verbindung zwischen einem Zellverbinder (3), welcher mit Polen (1.1.P1, 1.1.P2, 1.2.P1, 1.2.P2) von zumindest zwei Zellen (1.1, 1.2) eines Batteriesystems verbunden ist, und einer Elektronikeinheit (5) durch einen Leiter (6), umfassend die Schritte:
- Befestigen eines ersten Kontaktierungselements (4.1) am Zellverbinder (3),
- Befestigen eines zweiten Kontaktierungselements (4.2) an der Elektronikeinheit (5),
- Einlegen eines ersten Abschnitts (6.1) des Leiters (6) in eine erste Hilfsvorrichtung (8.1) des ersten Kontaktierungselements (4.1), wobei die Einlegerichtung senkrecht zur Grundfläche (3G) des Zellverbinders (3) ist,
- Verschieben der ersten Hilfsvorrichtung (8.1) parallel zur Grundfläche (3G) des Zellverbinders (3) zu den ersten Kontaktgliedern (7) des ersten Kontaktierungselements (4.1),
- Einlegen eines zweiten Abschnitts (6.2) des Leiters (6) in eine zweite Hilfsvorrichtung (8.2) des zweiten Kontaktierungselements (4.2), wobei die Einlegerichtung senkrecht zur Grundfläche (5G) der Elektronikeinheit (5) ist,
- Verschieben der zweiten Hilfsvorrichtung (8.2) parallel zur Grundfläche (5G) der Elektronikeinheit (5) zu den ersten Kontaktgliedern (7) des zweiten Kontaktierungselements (4.2).

12. Verfahren zur Herstellung einer elektrisch leitenden Verbindung nach Anspruch 11,
wobei das erste Kontaktierungselement (4.1) zweite Kontaktglieder (9) umfasst, und wobei durch das Verschieben der ersten Hilfsvorrichtung (8.1) die Isolation eines Abschnitts des Leiters (6) zwischen der ersten Hilfsvorrichtung (8.1) und den zweiten Kontaktgliedern (9) verklemmt wird.

13. Verfahren zur Herstellung einer elektrisch leitenden Verbindung nach Anspruch 11 oder Anspruch 12,
wobei das zweite Kontaktierungselement (4.2) zweite Kontaktglieder (9) umfasst, und wobei durch das Verschieben der zweiten Hilfsvorrichtung (8.2) die Isolation eines Abschnitts des Leiters (6) zwischen der zweiten Hilfsvorrichtung (8.2) und den zweiten Kontaktgliedern (9) verklemmt wird.

## Claims

1. Battery system, comprising a plurality of cells (1.1., 1.2) which are arranged in at least one stack, a first pole (1.1.P1) of a first cell (1.1) being connected in an electrically conductive manner to a second pole (1.2.P2) of a second cell (1.2) by a cell connector (3), an electronics unit (5) adapted to detect the voltage of the cells (1.1, 1.2), a first contacting element (4.1) being arranged on the cell connector (3) and a second contacting element (4.2) being arranged on the electronics unit (5), and a conductor (6), a first section (6.1) of the conductor (6) being connected in an electrically conductive manner to the first contacting element (4.1) and a second section (6.2) of the conductor (6) being connected in an electrically conductive manner to the second contacting element (4.2), wherein the contacting of the conductor (6) with the first and second contacting elements (4.1, 4.2) is carried out by means of first contact members (7) formed at the first and second contacting elements (4.1, 4.2) and adapted to penetrate the insulation of the conductor (6) at least in sections and to deform the conductor (6) at least in sections, wherein the first contacting element (4.1) comprises a first opening (4.10) and the second contacting element (4.2) comprises a second opening (4.20) into which the conductor (6) may be inserted for establishing contact with the first contact members (7), wherein the first opening (4.10) is oriented such that the first section (6.1) of the conductor (6) may be inserted parallel to the base surface (3G) of the cell connector (3), and wherein the second opening (4.20) is oriented such that the second section (6.2) of the conductor (6) may be inserted parallel to the base surface (5G) of the electronics unit (5), wherein a first auxiliary device (8.1) is arranged at the first contacting element (4.1) and a second auxiliary device (8.2) is arranged at the second contacting element (4.2), wherein the first auxiliary device (8.1) comprises a first receiving section (8.1A) into which the first section (6.1) of the conductor (6), in the non-contacted state, may be inserted perpendicular to the base surface (3G) of the cell connector (3), and the second auxiliary device (8.2) comprises a second receiving section (8.2A) into which the second section (6.2) of the conductor (6), in the non-contacted state, may be inserted perpendicular to the base surface (5G) of the electronics unit (5), wherein the first auxiliary device (8.1) is formed displaceable parallel to the base surface (3G) of the cell connector (3) towards the first contact members (7) of the first contacting element (4.1), for contacting purposes, and the second auxiliary device (8.2) is formed displaceable parallel to the base surface (5G) of the electronics unit (5) towards the first contact members (7) of the second contacting element (4.2), for contacting purposes, wherein the first and second contacting elements (4.1, 4.2) as well as the first and second auxiliary devices (8.1, 8.2) comprise guides or rails adapted for the displacement.

2. Battery system according to claim 1,
**characterized in that** the first auxiliary device (8.1), in the non-contacted state of the first contacting element (4.1), is arranged such that it at least partially covers the first opening (4.10), and that the second auxiliary device (8.2), in the non-contacted state of the second contacting element (4.2) is arranged such that it at least partially covers the second opening (4.20).

3. Battery system according to any of claims 1 to 2,
**characterized in that** the stack of the cells (1.1, 1.2) is arranged such that the poles (1.1.P1, 1.1.P2, 1.2.P1, 1.2.P2) of the cells (1.1, 1.2) form two rows, wherein the electronics unit (5) is arranged between these rows.

4. Battery system according to any of claims 1 to 3,
**characterized in that** the electronics unit (5) is fastened on a holding plate which is arranged on the at least one stack of cells (1.1, 1.2).

5. Battery system according to any of claims 1 to 4,
**characterized in that** the conductor (6) extends in a straight line from the first contacting element (4.1) to the second contacting element (4.2) until achieving height compensation and length compensation.

6. Battery system according to any of claims 1 to 4,
**characterized in that** at least one extension is formed at the holding plate, which is adapted to deflect the run of the conductor (6) from the first contacting element (4.1) to the second contacting element (4.2).

7. Battery system according to any of claims 1 to 6,
**characterized in that** the base surface (5G) of the electronics unit (5) is parallel to the base surface (3G) of the cell connector (3).

8. Battery system according to any of claims 1 to 7,
**characterized in that** the base surface (5G) of the electronics unit (5) is arranged in the same plane as the base surface (3G) of the cell connector (3).

9. Battery system according to any of claims 1 to 8,
**characterized in that** the first contacting element (4.1) comprises second contact members (9) which are adapted to clamp, in the contacted state, a section of the conductor at the insulation thereof.

10. Battery system according to any of claims 1 to 9,
**characterized in that** the second contacting element (4.2) comprises second contact members (9) which are adapted to clamp, in the contacted state, a section of the conductor at the insulation thereof.

11. Method for producing an electroconductive connection between a cell connector (3), which is connected to poles (1.1.P1, 1.1.P2, 1.2.P1, 1.2.P2) of at least two cells (1.1, 1.2) of a battery system, and an electronics unit (5) by a conductor (6), comprising the following steps:
- fastening a first contacting element (4.1) at the cell connector (3),
- fastening a second contacting element (4.2) at the electronics unit (5),
- inserting a first section (6.1) of the conductor (6) into a first auxiliary device (8.1) of the first contacting element (4.1), wherein the insertion direction is perpendicular to the base surface (3G) of the cell connector (3),
- displacing the first auxiliary device (8.1) parallel to the base surface (3G) of the cell connector (3) towards the first contact members (7) of the first contacting element (4.1),
- inserting a second section (6.2) of the conductor (6) into a second auxiliary device (8.2) of the second contacting element (4.2), wherein the insertion direction is perpendicular to the base surface (5G) of the electronics unit (5),
- displacing the second auxiliary device (8.2) parallel to the base surface (5G) of the electronics unit (5) towards the first contact members (7) of the second contacting element (4.2).

12. Method for producing an electroconductive connection according to claim 11,
wherein the first contacting element (4.1) comprises second contact members (9), and wherein, by displacing the first auxiliary device (8.1), the insulation of a section of the conductor (6) is clamped between the first auxiliary device (8.1) and the second contact members (9).

13. Method for producing an electroconductive connection according to claim 11 or claim 12,
wherein the second contacting element (4.2) comprises second contact members (9), and wherein, by displacing the second auxiliary device (8.2), the insulation of a section of the conductor (6) is clamped between the second auxiliary device (8.2) and the second contact members (9).

## Revendications

1. Système de batterie, comprenant une pluralité d'éléments (1.1, 1.2) qui sont disposés dans au moins un empilement, un premier pôle (1.1.P1) d'un premier élément (1.1) étant relié de manière électroconductrice à un deuxième pôle (1.2.P2) d'un deuxième élément (1.2) par un connecteur d'éléments (3), une unité électronique (5), qui est conçue pour détecter la tension des éléments (1.1, 1.2), un premier élément de mise en contact électrique (4.1) étant disposé sur l'unité électronique (5) et un deuxième élément de mise en contact électrique (4.2) étant disposé sur le connecteur d'éléments (3), et un conducteur (6), une première partie (6.1) du conducteur (6) étant reliée de manière partie au premier élément de mise en contact électrique (4.1) et une deuxième partie (6.2) du conducteur (6) étant reliée de manière électroconductrice au deuxième élément de mise en contact électrique (4.2), la mise en contact électrique du conducteur (6) avec le premier et le deuxième élément de mise en contact électrique (4.1, 4.2) étant mise en oeuvre au moyen de premiers organes de contact (7), qui sont formés sur le premier et le deuxième élément de mise en contact électrique (4.1, 4.2) et qui sont conçus pour pénétrer au moins sur certaines parties dans l'isolation du conducteur (6) et pour déformer le conducteur (6) au moins sur certaines parties, le premier élément de mise en contact électrique (4.1) comprenant un premier orifice (4.10) et le deuxième élément de mise en contact électrique (4.2) comprenant un deuxième orifice (4.20), dans lequel peut être introduit le conducteur (6) pour la mise en contact électrique avec les premiers organes de contact (7), le premier orifice (4.10) étant conçu de sorte que la première partie (6.1) du conducteur (6) peut être introduite parallèlement à la surface de base (3G) du connecteur d'éléments (3) et le deuxième orifice (4.20) étant conçu de sorte que la deuxième partie (6.2) du conducteur (6) peut être introduite parallèlement à la surface de base (5G) de l'unité électronique (5), un premier dispositif auxiliaire (8.1) étant disposé sur le premier élément de mise en contact électrique (4.1) et un deuxième dispositif auxiliaire (8.2) étant disposé sur le deuxième élément de mise en contact électrique (4.2), le premier dispositif auxiliaire (8.1) comprenant une première partie de logement (8.1A) dans laquelle la première partie (6.1) du conducteur (6), lorsque ce dernier n'est pas mis en contact, peut être insérée perpendiculairement à la surface de base (3G) du connecteur d'éléments (3), et en ce que le deuxième dispositif auxiliaire (8.2) comprend une deuxième partie de logement (8.2A) dans laquelle la deuxième partie (6.2) du conducteur (6), lorsque ce dernier n'est pas mis en contact électrique, peut être insérée perpendiculairement à la surface de base (5G) de l'unité électronique (5), le premier dispositif auxiliaire (8.1) destiné à la mise en contact électrique étant conçu pour pouvoir se déplacer parallèlement à la surface de base (3G) du connecteur d'éléments (3) en direction des premiers organes de contact (7) du premier élément de mise en contact électrique (4.1), et en ce que le deuxième dispositif auxiliaire (8.2) destiné à la mise en contact électrique est conçu pour pouvoir se déplacer parallèlement à la surface de base (5G) de l'unité électronique (5) en direction des premiers organes de contact (7) du deuxième élément de mise en contact électrique (4.2), le premier et le deuxième élément de mise en contact électrique (4.1, 4.2) ainsi que le premier et le deuxième dispositif auxiliaire (8.1, 8.2) comprenant des guidages ou des rails adaptés à ce déplacement.

2. Système de batterie selon la revendication 1, **caractérisé en ce que** le premier dispositif auxiliaire (8.1), lorsque le premier élément de mise en contact électrique (4.1) n'est pas mis en contact, est disposé de sorte qu'il recouvre au moins en partie le premier orifice (4.10), et **en ce que** le deuxième dispositif auxiliaire (8.2), lorsque le deuxième élément de mise en contact électrique (4.2) n'est pas mis en contact, est disposé de sorte qu'il recouvre au moins en partie le deuxième orifice (4.20).

3. Système de batterie selon l'une quelconque des revendications 1 à 2,
**caractérisé en ce que** l'empilement des éléments (1.1, 1.2) est disposé de sorte que les pôles (1.1.P1, 1.1.P2, 1.2.P1, 1.2.P2) des éléments (1.1, 1.2) forment deux rangées, l'unité électronique (5) étant disposée entre ces rangées.

4. Système de batterie selon l'une quelconque des revendications 1 à 3,
**caractérisé en ce que** l'unité électronique (5) est fixée sur une plaque de retenue, laquelle est disposée sur l'empilement ou les empilements d'éléments (1.1, 1.2).

5. Système de batterie selon l'une quelconque des revendications 1 à 4,
**caractérisé en ce que** le conducteur (6) s'étend jusqu'à une compensation de la hauteur et jusqu'à une compensation de la longueur et en ligne droite du premier élément de mise en contact électrique (4.1) au deuxième élément de mise en contact électrique (4.2).

6. Système de batterie selon l'une quelconque des revendications 1 à 4,
**caractérisé en ce qu'**au moins un prolongement, qui est conçu pour dévier le tracé du conducteur (6) du premier élément de mise en contact électrique (4.1) au deuxième élément de mise en contact électrique (4.2), est formé sur la plaque de retenue.

7. Système de batterie selon l'une quelconque des revendications 1 à 6,
**caractérisé en ce que** la surface de base (5G) de l'unité électronique (5) est parallèle à la surface de base (3G) du connecteur d'éléments (3).

8. Système de batterie selon l'une quelconque des revendications 1 à 7,
**caractérisé en ce que** la surface de base (5G) de l'unité électronique (5) est disposée dans le même plan que la surface de base (3G) du connecteur d'éléments (3).

9. Système de batterie selon l'une quelconque des revendications 1 à 8,
**caractérisé en ce que** le premier élément de mise en contact électrique (4.1) comprend des deuxièmes organes de contact (9), qui sont conçus, lorsqu'ils sont mis en contact électrique, pour bloquer une partie du conducteur sur l'isolation de ce dernier.

10. Système de batterie selon l'une quelconque des revendications 1 à 9,
**caractérisé en ce que** le deuxième élément de mise en contact électrique (4.2) comprend des deuxièmes organes de contact (9), qui sont conçus, lorsqu'ils sont mis en contact électrique, pour bloquer une partie du conducteur sur l'isolation de ce dernier.

11. Procédé de production d'une liaison électroconductrice entre un connecteur d'éléments (3), lequel est relié à des pôles (1.1.P1, 1.1.P2), 1.2.P1, 1.2.P2) d'au moins deux éléments (1.1, 1.2) d'un système de batterie, et une unité électronique (5) par un conducteur (6), comprenant les étapes consistant à :
- fixer un premier élément de mise en contact électrique (4.1) sur le connecteur d'éléments (3),
- fixer un deuxième élément de mise en contact électrique (4.2) sur l'unité électronique (5),
- insérer une première partie (6.1) du conducteur (6) dans un premier dispositif auxiliaire (8.1) du premier élément de mise en contact électrique (4.1), le dispositif d'insertion étant perpendiculaire à la surface de base (3G) du connecteur d'éléments (3),
- déplacer le premier dispositif auxiliaire (8.1) parallèlement à la surface de base (3G) du connecteur d'éléments (3) en direction des premiers organes de contact (7) du premier élément de mise en contact électrique (4.1),
- insérer une deuxième partie (6.2) du conducteur (6) dans un deuxième dispositif auxiliaire (8.2) du deuxième élément de mise en contact électrique (4.2), le dispositif d'insertion étant perpendiculaire à la surface de base (5G) de l'unité électronique (5),
- déplacer le deuxième dispositif auxiliaire (8.2) parallèlement à la surface de base (5G) de l'unité électronique (5) en direction des premiers organes de contact (7) du deuxième élément de mise en contact électrique (4.2).

12. Procédé de production d'une liaison électroconductrice selon la revendication 11,
le premier élément de mise en contact électrique (4.1) comprenant des deuxièmes organes de contact (9), et le déplacement du premier dispositif auxiliaire (8.1) permettant le blocage de l'isolation d'une partie du conducteur (6) entre le premier dispositif auxiliaire (8.1) et les deuxièmes organes de contact (9).

13. Procédé de production d'une liaison électroconductrice selon la revendication 11 ou selon la revendication 12,
le deuxième élément de mise en contact électrique (4.2) comprenant des deuxièmes organes de contact (9), et le déplacement du deuxième dispositif auxiliaire (8.2) permettant le blocage de l'isolation d'une partie du conducteur (6) entre le deuxième dispositif auxiliaire (8.2) et les deuxièmes organes de contact (9).
